Europäisches Patentamt

European Patent Office

Office européen des brevets

(19)

(11) EP 0 765 701 A1

(12) **EUROPÄISCHE PATENTANMELDUNG**

(43) Veröffentlichungstag:
02.04.1997 Patentblatt 1997/14

(51) Int. Cl.⁶: **B21D 53/04**, B21D 13/04,
B21C 37/083

(21) Anmeldenummer: 96106244.5

(22) Anmeldetag: 20.04.1996

(84) Benannte Vertragsstaaten:
AT BE CH DE DK ES FI FR GB GR IE IT LI LU MC
NL PT SE

(30) Priorität: 26.09.1995 DE 19535834

(71) Anmelder: **Helmut Lingemann GmbH & Co.**
D-42111 Wuppertal (DE)

(72) Erfinder:
• **Brede, Peter**
D-42289 Wuppertal (DE)
• **Even, Michael**
D-42897 Remscheid (DE)

(74) Vertreter: **Patentanwälte**
**Dr. Solf & Zapf**
**Schlossbleiche 20**
**42103 Wuppertal (DE)**

(54) **Verfahren zur Herstellung von Flachrohren für Wärmetauscher, Vorrichtung sowie Flachrohr**

(57) Die Erfindung betrifft ein Verfahren zur Herstellung von Flachrohren für Wärmetauscher mittels der folgenden Arbeitsschritte:

a) kontinuierlicher Durchlauf eines Endlosblechstreifens (7) im Durchgang (49) zweier entgegengesetzt drehender Prägerollen (2,3), insbesondere einer treibenden Gegenprägerolle (2) und einer sikkenden, Vorsprünge aufweisenden Prägerolle (3),
b) einseitiges Sicken des Endlosblechstreifens (7) im Durchgang (49) durch die sickende Prägerolle (3) mit einstellbarer Unterbrechung des Sickens,
c) die einstellbare Unterbrechung erzeugt eine wechselnde Beabstandung des Durchganges (49) zwischen den Prägerollen, was jeweils zu einem Sickenfreiraum (10) zwischen den Sickenabschnitten (39) führt,
d) Rohrrollverformung des gesickten Endlosblechstreifens (7) zu einem stoßschlitzgeschlossenen Endlosflachrohr,
e) Stoßschlitzverschließung des Endlosflachrohres,
f) Abschneiden von Flachrohren vom verschlossenen Endlosflachrohr im Sickenfreiraum (10).

Fig. 8a

EP 0 765 701 A1

**Beschreibung**

Die Erfindung betrifft ein Verfahren zur Herstellung von Flachrohren für Wärmetauscher, eine Vorrichtung zur Herstellung von gesickten Blechstreifen zur Weiterverarbeitung zu Flachrohren sowie ein Flachrohr, wobei das Flachrohr auf beiden Flachrohrseiten einen Sickenabschnitt und jeweils endseitig einen sickenfreien Steckabschnitt enthält.

Flachrohre für Wärmetauscher, Kühler oder dergleichen der gattungsgemäßen Art werden z.B. in der US-PS 4 470 452 beschrieben. Sie weisen eine Vielzahl von in die Flachseitenwandungen eingebrachten, in den Innenraum ragenden Ausbeulungen, Vorsprünge, Sikken (engl. Dimples) od.dgl. auf, die hindernisartig die Strömung des Fluids in den Rohren beeinflussen sollen. Die Flachrohre werden aus einzelnen Blechstreifen hergestellt, indem sie rollverformt und seitlich gekrempt verfaltet werden und schließlich an der Krempstelle längsverschweißt bzw. verlötet werden. Die Flachrohre werden mit ihren Enden in Schlitze von Wärmetauscher-Sammelrohren (US-PS 5 052 480, Fig. 4) oder Wasserkästen von Kühlereinrichtungen (EP 0 198 581 B1, Fig. 5) gesteckt und an der Kontaktstelle verlötet. Wegen der Verlötung weisen die Endbereiche der Flachrohre auf einer bestimmten Länge keine Ausbeulungen, Vorsprünge bzw. Sicken auf (sickenfreie Steckabschnitte).

Durch die Herstellung einzelner Flachrohre aus abgeschnittenen gesickten Blechstreifen kommt es im wesentlichen zu Arbeitsschrittunterbrechungen, die weitgehend zu kostenaufwendigen Zeitverzögerungen führen.

Aufgabe der Erfindung ist es, ein Verfahren zur Herstellung eines Flachrohres und einer zugehörigen Vorrichtung aufzuzeigen, mit denen auf einfache und kostengünstige Weise mit Sicken versehene Flachrohre herstellbar sind, wobei insbesondere Flachrohre unterschiedlicher Länge mit vorbestimmten, jedoch etwa gleich langen sickenfreien Endbereichen (Steckabschnitten) herstellbar sein sollen.

Gelöst wird diese Aufgabe durch die Merkmale des Anspruchs 1.

Vorteilhafte Weiterbildungen der Erfindung werden in den Unteransprüchen gekennzeichnet.

Die Erfindung eröffnet die Möglichkeit, auf einfache und kostengünstige Weise mit Ausbeulungen, Sicken od.dgl. versehene Flachrohre aus einem Endlosblechstreifen in einem kontinuierlichen Verfahren herzustellen. Mit der als Unterbrecher des Sickens in einem Prägedurchlauf fungierenden Kurvenscheibenwelle erfolgt ein rationelle Bearbeitung des Endlosblechstreifens. Die Einstellungen der Umdrehungsgeschwindigkeiten einer der Prägerollen und der Kurvenwellenscheibe ergeben eine einfache, genaue Handhabung bezüglich der jeweiligen zeitlich und längenmäßig gleich bzw. verschiedenartig einstellbaren Prägedurchläufe.

Die Erfindung wird anhand eines Ausführungsbeispiels mittels mehrerer Zeichnungen näher erläutert.

Es zeigen:

Fig. 1 eine Darstellung eines Ausschnittes eines gesickten Endlosblechstreifens zur Herstellung von drei Flachrohren für Wärmetauscher,

Fig. 2 eine schematische Darstellung einer erfindungsgemäßen Vorrichtung zur Herstellung eines gesickten Endlosblechstreifens zur Weiterverarbeitung zu flachen Wärmetauscherrohren in einer Vorderansicht,

Fig. 3 eine schematische Darstellung einer erfindungsgemäßen Vorrichtung zur Herstellung eines gesickten Endlosblechstreifens für flache Wärmetauscherrohre in einer Seitenansicht nach Fig. 2,

Fig. 4a eine schematische Darstellung zweier Kurvenscheiben auf der Kurvenscheibenwelle bei übereinstimmender, parallel gerichteter Abflachung in Seitenansicht,

Fig. 4b eine schematische Darstellung zweier Kurvenscheiben auf der Kurvenscheibenwelle bei übereinstimmender, parallel gerichteter Abflachung in Vorderansicht,

Fig. 5a eine schematische Darstellung zweier Kurvenscheiben auf der Kurvenscheibenwelle bei um einen Verstellwinkel $\alpha=90°$ verschwenkten Abflachungen in Seitenansicht,

Fig. 5b eine schematische Darstellung zweier Kurvenscheiben auf der Kurvenscheibenwelle bei um einen Verstellwinkel $\alpha=90°$ verschwenkten Abflachungen in Vorderansicht,

Fig. 6a eine schematische Darstellung zweier Kurvenscheiben auf der Kurvenscheibenwelle bei um einen kleiner als 90° vorhandenen Verstellwinkel $\alpha$ verschwenkten Abflachungen in Seitenansicht,

Fig. 6b eine schematische Darstellung zweier Kurvenscheiben auf der Kurvenscheibenwelle bei um einen kleiner als 90° vorhandenen Verstellwinkel $\alpha$ verschwenkten Abflachungen in Vorderansicht,

Fig. 7a eine schematische Darstellung der Rollen- und Wellenanordnung der erfindungsgemäßen Vorrichtung in Seitenansicht in unabgesenkter Position der Prägerollen- und der Kurvenscheibenwellendrehachse,

Fig. 7b einen Ausschnitt I aus dem Prägedurchgang des Endlosblechstreifens zwischen Gegenprägerolle und Prägerolle in Fig. 7a in unabgesenkter Position der Prägerolle,

Fig. 8a eine schematische Darstellung der Rollen- und Wellenanordnung der erfindungsgemäßen Vorrichtung in Seitenansicht in abgesenkter Position der Prägerollen- und Kurvenscheibenwellendrehachse und

Fig. 8b einen Ausschnitt II aus dem Prägedurchgang des Endlosblechstreifens zwischen Gegenprägerolle und Prägerolle in Fig. 8a in abgesenkter Position der Prägerolle.

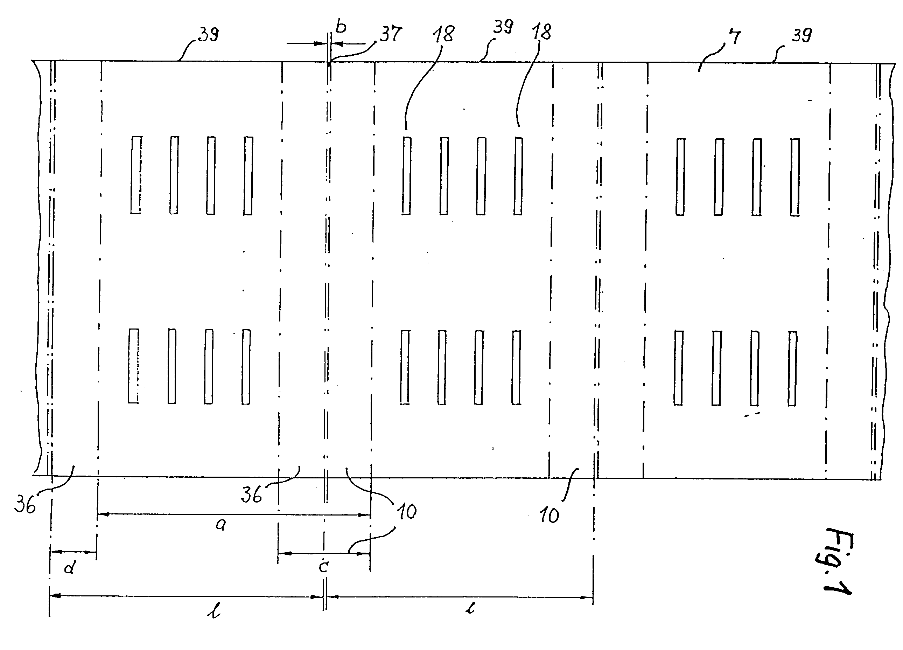

In Fig. 1 ist ein Ausschnitt eines nach dem erfindungsgemäßen, kontinuierlichen Verfahren hergestellten Endlosblechstreifens 7 mit drei Sickenabschnitten 39 und zwei vollständigen Sickenfreiräumen 10 dargestellt. Ein linienartig abgegrenzter Blechstreifen mit der Flachrohrlänge l enthält endseitig je einen sickenfreien Steckabschnitt 36 mit einer Steckabschnittslänge d. Zwischen den sickenfreien Steckabschnitten 36 befindet sich ein mit Sicken 18 insbesondere gleichabständig versehener Sickenabschnitt 39 mit einer Länge l - 2d. Da vom rohrrollverformten und verschweißten Endlosflachrohr im letzten Arbeitsschritt die Flachrohre in Querrichtung abgesägt werden, ist der Sägeabschnitt 37 mit der Sägeschnittbreite b bei einer Einstellänge a eines Prägedurchlaufs durch die erfindungsgemäße Vorrichtung 1 berücksichtigt. Die Flachrohre mit der Flachrohrlänge l, die gleich der Einstellänge a abzüglich der Sägeschnittbreite b ist, werden vorzugsweise gleichabständig in einer Sägeeinrichtung im letzten Arbeitsschritt des kontinuierlichen Verfahrens abgesägt.

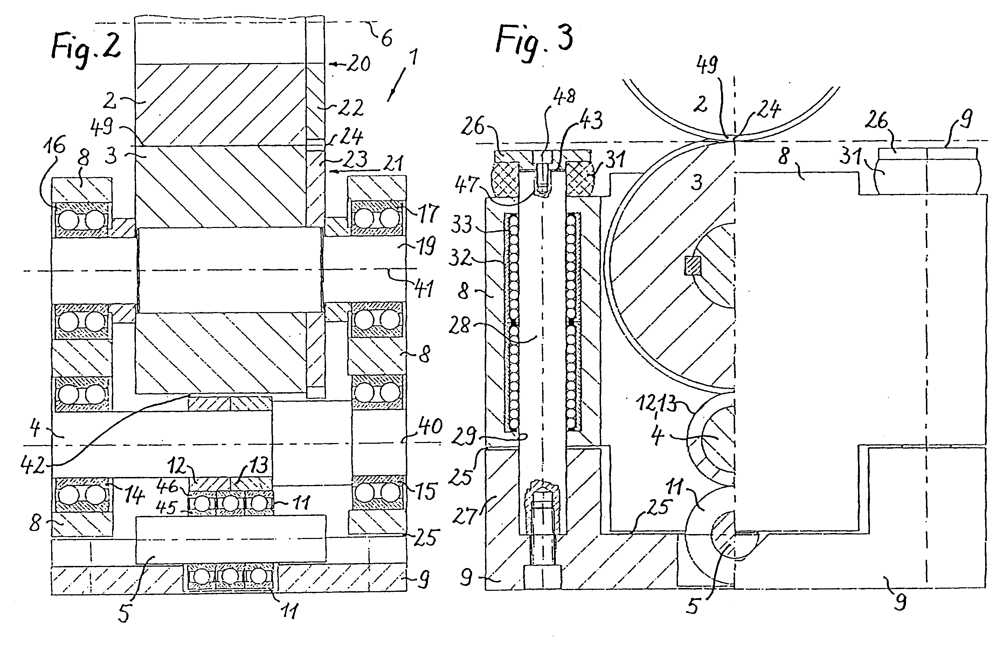

In Fig. 2 ist eine erfindungsgemäße Vorrichtung 1 zur Herstellung eines gesickten Endlosblechstreifens 7 für flache Wärmetauscherrohre der Flachrohrlänge l schematisch dargestellt. Die Fig. 2 und 3 sind im folgenden gemeinsam zu betrachten, da sie eine Vorder- und eine Seitenansicht der erfindungsgemäßen Vorrichtung 1 darstellen.

Die erfindungsgemäße Vorrichtung 1 enthält im wesentlichen vier vorzugsweise senkrecht übereinander angeordnete zylinderförmige Rollen 2,3 bzw. Wellen 4,5. Die beiden oberen Rollen 2,3 sind die Gegenprägerolle 2 und die Prägerolle 3, von denen die jeweils außen befindliche um eine fest vorgegebene Drehachse 6 drehbar gelagert ist.

In den Fig. 2 und 3 ist die Gegenprägerolle 2 die oben außenwärts angeordnete Rolle, die beidseitig im Standgehäuse 9 um die Gegenprägerollendrehachse 6 gelagert ist und vorzugsweise von einem externen Antrieb angetrieben wird.

Die Prägerolle 3 und die darunter befindliche Welle, die in Form einer Kurvenscheibenwelle 4 ausgebildet ist, sind in einem Verschiebegehäuse 8 untergebracht, das federgestützt linear vorzugsweise senkrecht verschiebbar im Standgehäuse 9 zwischen der Gegenprägerolle 2 und der Stützwelle 5 angeordnet ist. Die feste zylinderförmige Stützwelle 5, um die ein Kugellager 11 drehbar gelagert ist, befindet sich unterhalb der zum Verschiebegehäuse 8 gehörenden Kurvenscheibenwelle 4.

Dabei besitzen die Prägerollen 2,3 vorzugsweise einen wesentlich größeren Durchmesser als die beiden Wellen 4,5. Die Prägerolle 3 weist auf ihrem Umfang vorzugsweise gleichabständige Vorsprünge 44 auf, die die Sicken 18 vorzugsweise als rinnenförmige, rillenförmige od.dgl. Ausbeulungen im transportierten Endlosblechstreifen 7 während des Prägedurchlaufs erzeugen.

Die Vorsprünge 44 sind auf der Mantelfläche der Prägerolle 3 im wesentlichen derart ausgebildet, daß sie zwei parallel gerichtete Reihen besitzen, die zwei parallel gerichtete Sickenreihen auf dem Endlosblechstreifen 7 erzeugen können.

Das Kugellager 11, bestehend aus einem Innenring 45, aus einem Außenring 46 und zwischenliegenden Kugeln, wobei der Innenring 45 mit der Stützwelle 5 fest verbunden ist, steht mit zwei Kurvenscheiben 12 und 13, die ringartig, aber mit einer vorgegebenen, sekantenförmige, ebene Abflachung 34 bzw. 35 ausgebildet sind, auf der Kurvenscheibenwelle 4 in Verbindung, wobei die ringartigen Kurvenscheiben 12,13 immer im Kontakt mit dem Außenring 46 sind und auf dem Außenring 46 des Kugellagers 11 abrollen. Erfindungsgemäß sind die beiden Kurvenscheiben 12,13 axial zueinander auf der Drehachse 40 verstellbar gelagert. Die Verstellung kann manuell erfolgen.

Im Ausführungsbeispiel stellt die Kurve der Kurvenscheiben 12,13 eine Abflachung 34,35 dar. Die Kurve kann auch weniger konvex als die Rundung des Scheibenumfangs, aber auch konkav ausgebildet sein.

Die Kurvenscheibenwelle 4 ist im Verschiebegehäuse 8 in den Kugellagern 14,15 drehbar gelagert und mit einem vorzugsweisen separaten Antrieb (nicht eingezeichnet) versehen, der vorzugsweise in die lineare Senk-/Hebebewegung des Verschiebegehäuses 8 einbezogen und dessen Umdrehungsgeschwindigkeit einstellbar ist. Im Verschiebegehäuse 8 befinden sich weitere Kugellager 16,17, in denen die Drehwelle 19 der Prägerolle 3 gelagert ist. Die Drehachse 40 der Kurvenscheibenwelle 4 und die Drehachse 41 der Drehwelle 19 befinden sich dabei in einem festen Abstand zueinander am Verschiebegehäuse 8 montiert.

An jeweils einer der Stirnseiten 20,21 der Gegenprägerolle 2 und der Prägerolle 3 befindet sich gleichseitig jeweils ein Zahnrad 22,23, deren Zahnradaußendurchmesser größer als die Durchmesser der Gegenprägerolle 2 bzw. der Prägerolle 3 sind und deren Zähne in einer Kämmung 24 ineinandergreifen.

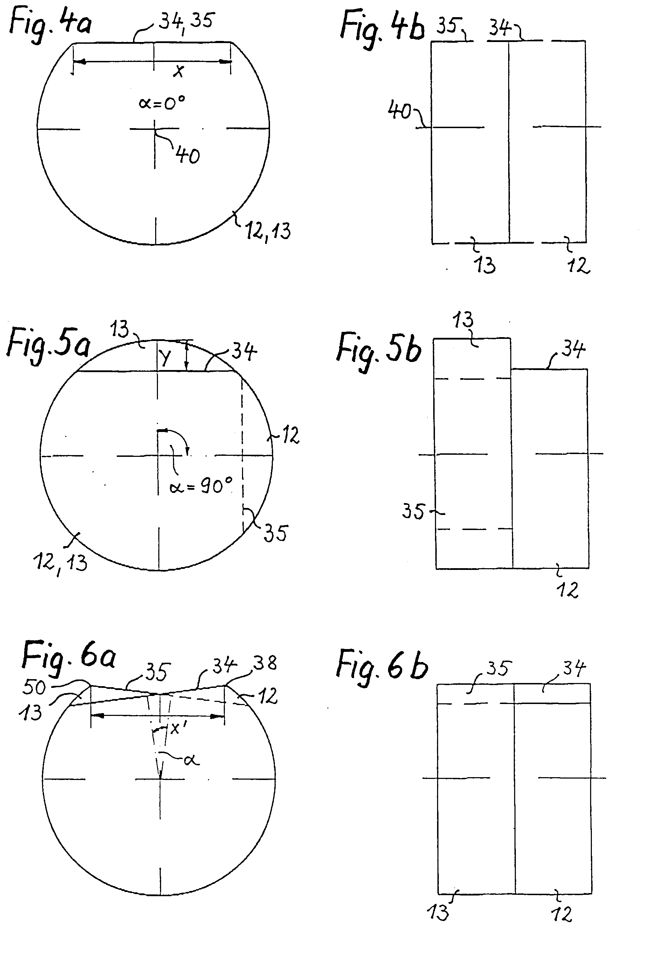

Das Verschiebegehäuse 8 befindet sich im Standgehäuse 9 als federbelastetes Teil eingebaut. Zwischen einem Oberteil 26 und einem Unterteil 27 des Standgehäuses 9 befinden sich vorzugsweise eckseitig durch jeweils eine oberteilige und eine unterteilige Verschraubung befestigte, vier senkrecht gerichtete Säulen 28 (in Fig. 3 ist nur eine Säule 28 eingezeichnet), an denen das Verschiebegehäuse 8 senkrecht linear verschiebbar gehalten ist. Das Verschiebegehäuse 8 besitzt demzufolge den Säulen zugeordnete, eckseitig durchgehende Führungsöffnungen 29 (in Fig. 3 ist nur eine Führungsöffnung 29 eingezeichnet), die die Säulen 28 umschließen, wobei der jeweilige Kontakt zwischen einer durchgehenden Führungsöffnung 29 und einer Säule 28 mittels einer in die Führungsöffnung 29 montierten Kugelbuchse 30 erfolgt. Längs der oberteilig und unterteilig arretierten Säulen 28 ist somit das Verschiebegehäuse 8 nebst Prägerolle 3 und Kurvenscheiben 12,13 linear verschiebbar. Zwischen der Säule 28 und dem Oberteil 26 ist ein Abstand als Spielraum 43 zur Einstellung des Prägerollenzwischenraumes 49 zwischen den beiden Prägerollen 2,3 und zur Einstellung der Federkraftbelastung des Verschiebegehäuses 8 auf eine Kurvenscheibe bzw. auf beide Kurvenscheiben vorgesehen, wobei der Abstand durch die Betätigung einer Einstellschraube 48, die das Oberteil 26 und eine obere stirnseitige Gewindeöffnung 47 der Säule 28 verbindet, verstellbar ist. Die Kämmung 24 der beiden Zahnräder 22,23 ist derart ausgelegt, daß sie bei Einstellung des Prägerollendurchgangs 49 und bei Absenkung des Verschiebegehäuses 8 bestehen bleibt und die treibende Gegenprägerolle 2 die Prägerolle 3 weiter über die Zahnräder 22,23 verdreht und antreibt, so daß der Endlosblechstreifen 7 kontinuierlich weitertransportiert wird. Auch zwischen dem Verschiebegehäuse 8 und dem Standgehäuse 9 befindet sich unterteilig ein Zwischenraum 25, der mindestens der Senk-/Hebehöhe y (Fig. 5a) der Abflachung 34,35 der Kurvenscheiben 12,13 entspricht.

An den an den Oberteilen 26 vorhandenen Einstellverschraubungen der Säulen 28 ist jeweils eine die Säule 28 umfassende insbesondere eine als Gummiring ausgebildete Feder 31 angeordnet, die das Verschiebegehäuse 8 rings um die Säulen 28 in Richtung der Unterteile 27 belastet. Die Federn 31 drücken das Verschiebegehäuse 8 samt der Prägerolle 3 und der Kurvenschieberwelle 4 auf das Kugellager 11 der Stützwelle 5. Durch die Einstellschrauben 48 werden die Kurvenscheiben 12,13 auf das Kugellager 11 der Stützwelle 5 derart abrollbar kontaktiert, daß die federnden Gummiringe 31 das Verschiebegehäuse 8 über die Kurvenscheiben 12,13 auf den Außenring des Kugellagers 11 mit einer durch die Einstellschraube 48 variierbaren Federkraft pressen.

Innerhalb einer Führungsöffnung 29 ist eine Kugelbuchse 30 vorhanden, die etwa ein Hohlzylindergehäuse 32 darstellt, in dem sich in linearer Weise eine Vielzahl von seriell angeordneten Kugeln 33 befinden, die die Säule 28 berühren und vorzugsweise das lineare Heben und Senken des Verschiebegehäuses 8 längs der vier Säulen 28 unterstützen bzw. verbessern.

In den Fig. 4a bis 6b sind die Kurvenscheiben 12,13 auf der Kurvenscheibenwelle 4 um die Drehachse 40 einheitlich eingezeichnet und jeweils in Seiten- und Vorderansicht dargestellt. Die Kurvenscheiben 12,13 und die Kurvenscheibenwelle 4 stellen hierbei im gezeichneten Bereich im wesentlichen jeweils eine runde Scheibe mit einer vorzugsweise ebenen, sekantenförmigen Abflachung 34,35 mit einer Abflachungsbreite x dar, wobei die Kurvenscheiben 12,13 mit der Kurvenscheibenwelle 4 über den Innenring 45 fest verbunden sind. In diesem Ausführungsbeispiel kann die Kurvenscheibenwelle 4 aus zwei wesentlichen Achsteilen (nicht ausdrücklich eingezeichnet) bestehen, auf denen sich jeweils eine der Kurvenscheiben 12 bzw. 13 befinden, wobei diese Achsteile zueinander verdrehbar gelagert und gegenseitig zueinander arretierbar sind.

Aber auch eine mit einer sekantenförmigen Abflachung 34 oder 35 versehene Kurvenscheibe 12 oder 13, die mit einem separat angeordneten, einstellbaren Antrieb verbunden ist, reicht schon aus, je nach Einstellung der Umdrehungsgeschwindigkeit vom separaten Antrieb aus der Sickenfreiraum 10 mit der Freiraumlänge c zu vergrößern bzw. zu verkleinern. Bei konstanter Umdrehungsgeschwindigkeit der Kurvenscheibenwelle 4 durch den separaten Antrieb ist für eine Verkleinerung des Sickenfreiraums 10 eine zweite Kurvenscheibe einsetzbar, durch deren Verstellbarkeit die Freiraumlänge c des Sickenfreiraums 10 bis zu einem bestimmten Minimalwert variierbar ist.

Die Einstellänge a entspricht einem an die Gegenprägerolle 2 angedrückten, sickenden und einem abgesenkten, nichtsickenden Umfangsbereich auf der Prägerolle 3, deren jeweilige Länge im wesentlichen sowohl von der eingestellten Umdrehungsgeschwindigkeit der Gegenprägerolle 2 und der eingestellten Umdrehungsgeschwindigkeit der Kurvenscheibenwelle 4 bestimmt wird.

In den Fig. 4a, 4b sind beide Kurvenscheiben 12,13 wie eine einzige dicke Kurvenscheibe angeordnet und derart zueinander nicht verstellt (Verstellwinkel $\alpha = 0°$), so daß im Prägedurchlauf mit den sekantenförmigen Abflachungen 34,35 der Abflachungsbreite x die längsten Sickenfreiräume 10 mit der Freiraumlänge $c = c(max)$ bei konstanter Umdrehungsgeschwindigkeit des separaten Kurvenscheibenwellenantriebs erzeugt werden können. Etwa die halbe Freiraumlänge c entspricht der Steckabschnittslänge d, mit der ein verlötetes Flachrohr in die Sammelrohre des Wärmetauschers eingesteckt und dann an den Kontaktstellen verlötet werden kann.

In den Fig. 5a, 5b sind die beiden Abflachungen 34,35 derart zueinander senkrecht verdreht, daß eine durchgängige runde Scheibe als Kurvenscheibe erhalten wird, die bedingt, daß keine Sickenfreiräume 10 erzeugbar sind und damit ein Sickenabschnitt 39 ohne einen Sickenfreiraum 10 erzeugt werden kann. Ein solcher Sickenabschnitt 39 ohne sickenfreien Steckabschnitt 36 ist aber in der Regel für die Flachrohrherstellung ungeeignet. In Fig. 5a ist die durch die Abflachung 34 vorhandene Senk-/Hebehöhe y an der Kurvenscheibe 12 dargestellt, was gleichermaßen für die Kurvenscheibe 13 zutrifft.

Eine Zwischenstellung zu den beiden Fig. 4 und 5 bezüglich der beiden axial verdrehbaren Kurvenscheiben 12,13 mit den Abflachungen 34,35 kann mit deren Darstellung in den Fig. 6a, 6b erreicht werden, so daß der Sickenfreiraum 10 mit einer Freiraumlänge c zwischen den Beträgen 0 < c < c(max) bei konstanter Umdrehungsgeschwindigkeit einstellbar ist. Mit den Abflachungen 34,35 der Abflachungsbreiten x an den Kurvenscheiben 12,13 ist durch insbesondere Verstellung der Kurvenscheiben 12,13 zu einer verringerten, effektiven Kurvenbreite x' die Freiraumlänge c der Sickenfreiräume 10 auf dem Endlosblechstreifen 7 einstellbar.

In der Regel können die Umdrehungsgeschwindigkeiten der antreibenden Gegenprägerolle 2 und der Kurvenscheibenwelle 4 durch die Unabhängigkeit beider zugehöriger Antriebe unterschiedlich festgelegt werden. Je nachdem, welches Längenverhältnis zwischen dem zu Sickenabschnitt 39 und dem nachfolgenden Sickenfreiraum 10 einstellbar (Einstellänge a eines Prägedurchlaufs mit a=l+b ) ist, können die Umdrehungsgeschwindigkeiten erhöht oder verringert werden.

Die Einstellung des Verstellwinkels $0° < \alpha < \alpha$ (max)=90° bezüglich der Abflachungen 34,35 der beiden Kurvenscheiben 12,13 zueinander erfolgt vorzugsweise manuell durch eine drehende Veränderung einer der beiden Kurvenscheiben 12,13 gegenüber der benachbarten Kurvenscheibe 13,12, wobei die Drehverstellung seitlich am Verschiebegehäuse 8 vorzugsweise mit einem separaten Drehknopf an einem Achsteil (beide nicht eingezeichnet) manuell erfolgen kann, wobei der betätigbare Drehknopf vorzugsweise dem Kurvenscheibenwellenantrieb gegenüberliegt. Eingestellt wird durch die Drehverstellung die verringerte, effektive Kurvenbreite x'.

Bei einer Kurvenbreite x' wird eine beidseitige Kantenüberhöhung 38,50 der beiden Kurvenscheiben 12,13 erreicht, mit der in nahezu abrupter Weise auch im Übergang von einem Sickenfreiraum 10 zum Sickenabschnitt 39 der Sickenabschnitt 39 mit gleichtiefen Sicken 18 ausbildbar ist und auch im Übergang vom Sickenabschnitt 39 in den Sickenfreiraum 10 gleichtiefe Sicken 18 erreicht werden. Dieser Zustand kann auch mit einer einzigen Kurvenscheibe 12 oder 13 erzielt werden, wenn anstelle zweier verstellter Abflachungsbereiches 34,35 mit der verringerten Kurvenbreite x' eine z.B. konkave Einbuchtung zwischen den Kantenüberhöhungen 38,50 vorhanden ist.

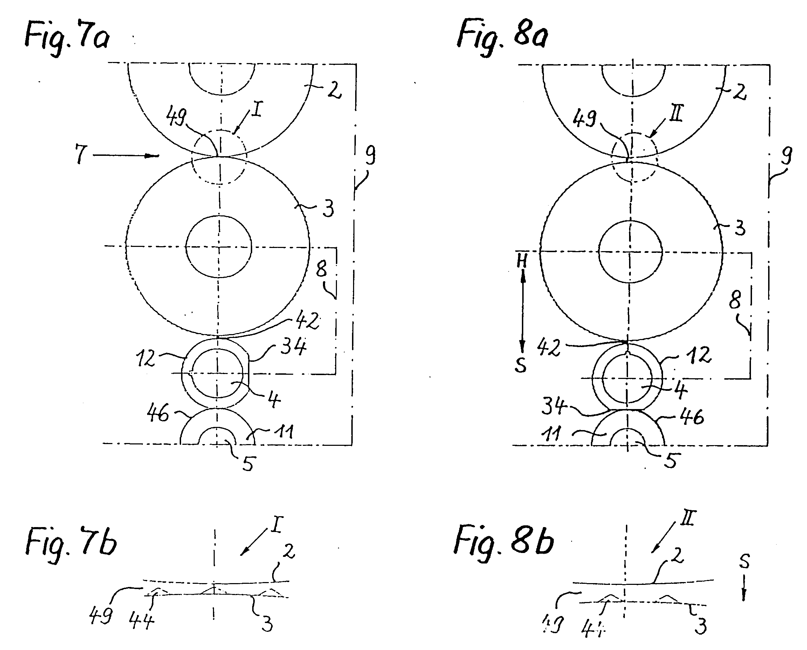

Anhand der Fig. 7a,7b und 8a,8b wird das erfindungsgemäße Verfahren zur Herstellung von Flachrohren für Wärmetauscher mittels eines Endlosblechstreifens 7, der kontinuierlich bearbeitet und verarbeitet wird, unter Einbindung der Vorrichtung 1 zur kontinuierlichen Sickung des Endlosblechstreifens 7 näher beschrieben:

In einer schematisch vereinfachten Rollen- und Wellenanordnung in den Fig. 7a,8a ist eine senkrecht übereinander gelagerte Anordnung der von der einerseits in festem Abstand zueinander gelagerten Gegenprägerolle 2 und der Stützwelle 5 im Standgehäuse 9 (punktiert gestrichelt) sowie von der andererseits in festem Abstand zueinander gelagerten, aber zum Standgehäuse 9 senkrecht verschieblichen Prägerolle 3 und der Kurvenscheibenwelle 4 im Verschiebegehäuse 8 (punktiert gestrichelt) gezeigt. Seitlich in Höhe des Prägerollendurchgangs 49 ist zwischen der Gegenprägerolle 2 und der Prägerolle 3 der unbearbeitete Endlosblechstreifen 7 einschiebbar, so daß ein kontinuierlicher Durchlauf gewährleistet werden kann.

Im Prägerollendurchgang 49 erfolgt ein einseitiges Sicken des Endlosblechstreifens 7 längs eines vorgegebenen Sickenabschnitts 39 durch eine der drehenden, mit musterartigen Vorsprüngen 44 versehenen Prägerollen 2 oder 3. Dabei wird das Sicken je nach Einstellung der Umdrehungsgeschwindigkeiten der Prägerolle 3 und der Kurvenscheibenwelle 4 zeitlich vorzugsweise gleichabständig unterbrochen.

Diese Unterbrechung erfolgt dann, wenn ein dem Sickenabschnitt 39 folgender Sickenfreiraum 10 vorgesehen ist. Dabei erfolgt eine Vergrößerung der Beabstandung des Prägerollendurchgangs 49 durch eine entfernende Positionsänderung einer der drehenden Prägerollen 2 oder 3. Die einstellbare wechselnde Unterbrechung erzeugt eine wechselnde Beabstandung des Prägerollendurchgangs 49, was jeweils zu einem Sickenfreiraum 10 zwischen den Sickenabschnitten 39 führt. Nach Abrollen des Sickenfreiraums 10 erfolgt jeweils eine Rückführung der drehenden Prägerolle 2 oder 3 in ihre sickenerzeugende Ausgangsposition für den dem Sickenfreiraum 10 nachfolgenden, zu sickenden Sickenabschnitt 39. Der den Prägerollendurchgang 49 verlassende gesickte Endlosblechstreifen 7 wird anschließend zu einem stoßschlitzgeschlossenen Endlosflachrohr rollverformt. Der entstehende Stoßschlitz wird in einer angeschlossenen Schweißanlage verschweißt. Danach wird eine etwa mittige Durchtrennung der Sickenfreiräume 10 quer zum Endlosblechstreifen 7 zur Erzeugung der Flachrohre durchgeführt.

Die zwischenzeitliche, unterbrechende Vergrößerung des Prägerollendurchgangs 49 wird insbesondere durch eine Absenkung der Prägerolle 3 mittels einer Kurvenscheibenwelle 4 durchgeführt, die eine von einer Kreisform abweichende Kurve, vorzugsweise eine Abflachung 34 bzw. 35 aufweist, deren radiale Senk-/Hebehöhe S/H relativ zu einer Stützwelle 5 auf das Positionsverhalten der drehenden Prägerolle 3 übertragen wird.

Die radiale Senk-/Hebehöhe S/H der mit den Sicken 18 erzeugenden Vorsprüngen 44 versehenen Prägerolle 3 wird durch insbesondere gegeneinander verstellbare Kurven, vorzugsweise sekantenförmigen Abflachungen 34,35 zweier Kurvenscheiben 12,13 zur Festlegung der unterbrechenden Vergrößerung des Prägerollendurchgangs 49 eingestellt.

Zwischen der Prägerolle 3 und der Kurvenscheibenwelle 4 besteht ein konstant beabstandeter Zwischenraum 42, so daß sich die Prägerolle 3 mit ihren sickenden Vorsprüngen 44 und die Kurvenscheibenwelle 4 einander nicht berühren. Dabei berühren aber gemäß der Fig. 4a,4b in Fig. 7a der gerundete Teil des Umfangs der Kurvenscheibe 12 den Außenring 46 des Kugellagers 11. Zwischen beiden besteht über die Prägerollendrehachse 41 und die Kurvenscheibenwellendrehachse 40 eine feste Zuordnung bzw. Verbindung, die in der Regel zueinander einen gleichbleibenden Abstand aufweisen, da sie im Verschiebegehäuse 8 gelagert sind.

In Fig. 7b ist der Prägerollendurchgang 49 während eines Prägedurchlaufes ohne den zwischen der Gegenprägerolle 2 und der Prägerolle 3 eingeschobenen Endlosblechstreifen 7 gezeigt. Die auf dem Umfang der Prägerolle 3 befindlichen Vorsprünge 44 weisen einen geringen Abstand zur Umfangsoberfläche der Gegenprägerolle 2 auf. Für die Durchführung einer Prägung bzw. Sickung ist es zweckmäßig, die Umfangsoberfläche der Gegenprägerolle 2 elastisch auzubilden bzw. mit Hohlräumen in Bereichen der vorgesehenen Sikkung zu versehen, damit die Vorsprünge 44 in den Endlosblechstreifen 7 gepreßt werden können.

In Fig. 8a befindet sich eine mit sekantenförmiger, ebener Abflachung 34 versehene Kurvenscheibe 12 auf dem Außenring 46 des Kugellagers 11. Das Bewegen der Abflachung 34 der Kurvenscheibe 12 auf dem Außenring 46 bewirkt ein Absenken des gesamten Verschiebegehäuses 8 und somit auch der Prägerolle 3 in Senkrichtung S (mit Pfeil gekennzeichnet). Unterstützt wird die Absenkung durch die aus dem Gummiring bestehende Feder 31 (Fig. 3), die das Verschiebegehäuse 8 belastet, bis durch die weitere Drehung der antreibbaren Kurvenscheibenwelle 4 die Abflachung 34 wieder in die runde Oberfläche der Kurvenscheibe 12 übergeht.

Dann wird auch die Prägerolle 3 in Heberichtung H (mit Pfeil gekennzeichnet) angehoben und der Abstand zur Gegenprägerolle 2 und somit der Prägerollendurchgang 49 bis auf den ursprünglichen Abstand verringert.

Die Fig. 8b zeigt die Position der Prägerolle 3 im Moment der Absenkung des Verschiebegehäuses 8. Durch den Kontakt der sekantenförmigen, ebenen Abflachung 34 mit dem Außenring 46 des Kugellagers 11 und der zum Gewicht des Verschiebegehäuses 8 zusätzlichen Federkraft des Gummifederrings 31 wird der Abstand zwischen den Umfangsoberflächen von der Gegenprägerolle 2 und der Prägerolle 3 vergrößert, so daß keine Prägung bzw. Sickung durch die vorzugsweise gleichbeabstandeten Vorsprünge 44 der Prägerolle 3 im Endlosblechstreifen 7 stattfindet und vorzugsweise gleichbeabstandete Sickenfreiräume 10 entstehen. Dabei bleibt aber die Kämmung 24 zwischen den Zahnrädern 22,23 der Prägerollen 2,3 bestehen, so daß die Prägerolle 3 und die Gegenprägerolle 2 den Endlosblechstreifen 7 weitertransportieren. Je nachdem, wie schnell die Kurvenscheibenwelle 4 von ihrem separaten Antrieb gedreht wird, um so kürzer oder länger ist der Zeit, bis die sickenfreie Zone 10 auf dem Endlosblechstreifen 7 endet und die Sickung weitergeführt wird.

Bei Verlängerung der Flachrohrlängen l erfolgt z.B. eine Verringerung der Umdrehungsgeschwindigkeit, bei kürzeren Flachrohren wird eine höhere Umdrehungsgeschwindigkeit der Kurvenscheibenwelle 4 eingestellt.

Verläßt der kontinuierlich bearbeitete Endlosblechstreifen 7 die erfindungsgemäße Vorrichtung 1, die Rohrrollverformungs- und Schweißanlge, so werden durch eine nachgeordnete Sägeeinrichtung die Sickenfreiräume 10 im Endlosflachrohr etwa mittig quer durchtrennt, so daß anschließend die vorgegebenen Flachrohre erhalten werden können.

Bezugszeichenliste

| | |
|---|---|
| 1 | Vorrichtung |
| 2 | Gegenprägerolle |
| 3 | Prägerolle |
| 4 | Kurvenscheibenwelle |
| 5 | Stützwelle |
| 6 | Gegenprägerollendrehachse |
| 7 | Endlosblechstreifen |
| 8 | Verschiebegehäuse |
| 9 | Standgehäuse |
| 10 | Sickenfreiraum |
| 11 | Kugellager |
| 12 | Kurvenscheibe |
| 13 | Kurvenscheibe |
| 14 | Kugellager |
| 15 | Kugellager |
| 16 | Kugellager |
| 17 | Kugellager |
| 18 | Sicken |
| 19 | Drehwelle |
| 20 | Stirnseite |
| 21 | Stirnseite |
| 22 | Zahnrad |
| 23 | Zahnrad |
| 24 | Kämmung |
| 25 | Gehäusezwischenraum |
| 26 | Oberteil |
| 27 | Unterteil |
| 28 | Säule |
| 29 | Führungsöffnung |
| 30 | Kugelbuchse |
| 31 | Feder |
| 32 | Hohlzylindergehäuse |
| 33 | Kugeln |
| 34 | Abflachung |
| 35 | Abflachung |
| 36 | Steckabschnitt |
| 37 | Sägeabschnitt |
| 38 | Kantenüberhöhung |
| 39 | Sickenabschnitt |
| 40 | Kurvenscheibenwellendrehachse |
| 41 | Prägerollendrehachse |
| 42 | konstanter Zwischenraum |
| 43 | Spielraum |
| 44 | Vorsprünge |
| 45 | Innenring |

| 46 | Außenring |
|----|-----------|
| 47 | Gewindeöffnung |
| 48 | Einstellschraube |
| 49 | Prägerollendurchgang |
| 50 | Kantenüberhöhung |
| a | Einstellänge |
| b | Sägeschnittbreite |
| c | Sickenfreiraumlänge |
| d | Steckabschnittslänge |
| l | Flachrohrlänge |
| α | Verstellwinkel |
| x | sekantenförmige Abflachungsbreite |
| x' | verringerte Abflachungsbreite |
| y | Senk-/Hebehöhe |
| S | Senkrichtung |
| H | Heberichtung |

**Patentansprüche**

1. Verfahren zur Herstellung von Flachrohren für Wärmetauscher, gekennzeichnet durch folgende Merkmalsschritte:

    a) kontinuierlicher Durchlauf eines Endlosblechstreifens (7) im Durchgang (49) zweier entgegengesetzt drehender Prägerollen (2,3), insbesondere einer treibenden Gegenprägerolle (2) und einer sickenden, Vorsprünge aufweisenden Prägerolle (3),
    b) einseitiges Sicken des Endlosblechstreifens (7) im Durchgang (49) durch die sickende Prägerolle (3) mit einstellbarer Unterbrechung des Sickens,
    c) die einstellbare Unterbrechung erzeugt eine wechselnde Beabstandung des Durchganges (49) zwischen den Prägerollen, was jeweils zu einem Sickenfreiraum (10) zwischen den Sickenabschnitten (39) führt,
    d) Rohrrollverformung des gesickten Endlosblechstreifens (7) zu einem verschließbaren Endlosflachrohr,
    e) Verschließung des Endlosflachrohres,
    f) Abschneiden von Flachrohren vorn verschlossenen Endlosflachrohr im Sickenfreiraum (10).

2. Verfahren nach Anspruch 1, dadurch gekennzeichnet, daß die Unterbrechung des Sickens eine als Unterbrecher fungierende Kurvenscheibe (12,13) auf einer Kurvenscheibenwelle (4) auslöst, indem die Kurve auf einer feststehenden Stützwelle (5) abrollt und sich die mit ihr in Verbindung stehende sickende Prägerolle (3) von der Gegenprägerolle (2) entfernt, wodurch der Durchgang (49) vergrößert wird.

3. Verfahren nach einem der vorhergehenden Ansprüche, dadurch gekennzeichnet, daß die zwischenzeitliche, unterbrechende Vergrößerung des Prägerollendurchgangs (49) durch eine Absenkung der Sicken (18) erzeugenden Prägerolle (3) mittels einer Kurvenscheibenwelle (4) durchgeführt wird, die eine von einer Kreisform abweichenden Kurve, vorzugsweise eine Abflachung bzw. zurückgesetzte Kurvenform (34,35) aufweist, deren radiale Senk-/Hebehöhe (y) relativ zu einer Stützwelle (5) auf das Positionsverhalten der drehenden Prägerolle (3) übertragen wird.

4. Verfahren nach einem der vorhergehenden Ansprüche, dadurch gekennzeichnet, daß das Sicken durch zwei zueinander verstellbare Kurvenscheiben (12,13), die sich auf der Kurvenscheibenwelle (4) befinden, unterbrochen wird.

5. Verfahren nach einem der vorhergehenden Ansprüche, dadurch gekennzeichnet, daß die Senk-/Hebehöhe (y) der mit Sicken (18) erzeugenden Vorsprüngen (44) versehenen Prägerolle (3) durch insbesondere zwei verstellbare Kurven, vorzugsweise durch axial verdrehbare Abflachungen bzw. zurückgesetzte Kurvenformen (34,35) zweier Kurvenscheiben (12,13) zur Festlegung der unterbrechenden Vergrößerung des Prägerollendurchgangs (49) eingestellt wird.

6. Vorrichtung zur Herstellung eines erfindungsgemäß gesickten Endlosblechstreifens (7) mit Sickenabschnitten (39) und Sickenfreiräumen (10) gemäß dem kontinuierlichen Verfahren nach vorhergehenden Ansprüchen, dadurch gekennzeichnet, daß sie ein Standgehäuse (9) und ein Verschiebegehäuse (8) enthält, wobei das Standgehäuse (9) im wesentlichen eine Gegenprägerolle (2) und eine senkrecht beabstandete Stützwelle (5) aufweist sowie das Verschiebegehäuse (8) im wesentlichen eine Prägerolle (2) und eine senkrecht beabstandete Kurvenscheibenwelle (4) enthält, wobei das Verschiebegehäuse (8) innerhalb des Standgehäuses (9) durch vorgegebene Drehungen einer Kurvenscheibe (12,13) auf der drehbaren, fest gelagerten Stützwelle (5) linear verschiebbar ist, so daß im Prägerollendurchgang (49) die Sickung einstellbar unterbrechbar ist.

7. Vorrichtung nach einem der vorhergehenden Ansprüche, dadurch gekennzeichnet, daß das Verschiebegehäuse (8) federgestützt linear verschiebbar im Standgehäuse (9) angeordnet ist.

8. Vorrichtung nach einem der vorhergehenden Ansprüche, dadurch gekennzeichnet, daß um die feste, zylinderförmige Stützwelle (5) mindestens ein Kugellager (11) drehbar gelagert ist, dessen Innenring (45) fest mit der Stützwelle (5) verbunden ist und dessen Außenring (46) von einer bzw. zwei Kurvenscheiben (12,13) ständig kontaktiert ist.

9. Vorrichtung nach einem der vorhergehenden Ansprüche, dadurch gekennzeichnet, daß die Gegenprägerolle (2) und die Prägerolle (3) wesentlich größere Durchmesser als beide Wellen (4,5) aufweisen.

10. Vorrichtung nach einem der vorhergehenden Ansprüche, dadurch gekennzeichnet, daß eine der Prägerollen (3) auf ihrem Umfang insbesondere zwei parallel gerichtete Reihen vorzugsweise gleichabständiger, musterartiger Vorsprünge (44) längs der Mantelfläche aufweist, die während des Prägedurchlaufs durch den Prägerollendurchgang (49) hindurch einseitige, vorzugsweise musterartig ausgebildete Ausbeulungen bzw. Sikken (18) erzeugen.

11. Vorrichtung nach einem der vorhergehenden Ansprüche, dadurch gekennzeichnet, daß die sickenden Vorsprünge (44) der Prägerolle (3) musterartig ausgebildet sind, so daß musterartige Sicken (18) im Endlosblechstreifen (7) entstehen.

12. Vorrichtung nach einem der vorhergehenden Ansprüche, dadurch gekennzeichnet, daß eine einfache Kurvenscheibe (12,13) oder zwei nebeneinander angeordnete, axial verdrehbare Kurvenscheiben (12,13) auf der Kurvenscheibenwelle (4) im Dauerkontakt mit der Stützwelle (5), insbesondere mit dem Außenring (46) der umgebenden Kugellager (11) sind.

13. Vorrichtung nach einem der vorhergehenden Ansprüche, dadurch gekennzeichnet, daß die beiden Kurvenscheiben (12,13) auf der Kurvenscheibenwelle (4) zueinander in einem vorgegebenen Verstellwinkel ($\alpha$) verstellbar sind.

14. Vorrichtung nach einem der vorhergehenden Ansprüche, dadurch gekennzeichnet, daß die von der Kreisform abweichenden Kurven (34,35) der Kurvenscheiben (12,13) im wesentlichen radial kürzer, insbesondere weniger konvex, sekantenförmig, konkav od.dgl. ausgebildet sind.

15. Vorrichtung nach einem der vorhergehenden Ansprüche, dadurch gekennzeichnet, daß die Kurvenscheibenwelle (4) aus mindestens zwei axial verdrehbaren und arretierbaren Achsteilen, die jeweils mit den Kurvenscheiben (12,13) in fester Verbindung stehen, besteht und eine der Achsteile mit dem separaten Antrieb verbunden ist und die andere der Achsteile mit einem betätigbaren Drehknopf zur Einstellung einer für die Unterbrechung effektiven Kurvenlänge versehen ist.

16. Vorrichtung nach einem der vorhergehenden Ansprüche, dadurch gekennzeichnet, daß eine der Prägerollen (2,3), vorzugsweise die Gegenprägerolle (2) mit einem vorzugsweise separaten Antrieb versehen ist, durch den die jeweilige Umdrehungsgeschwindigkeit der Prägerollen (2,3) einstellbar ist.

17. Vorrichtung nach einem der vorhergehenden Ansprüche, dadurch gekennzeichnet, daß die Kurvenscheibenwelle (4) für die Erzeugung der Sicken (18) mittels der Prägerolle (3) einen Unterbrecher darstellt und insbesondere mit einem separaten Antrieb versehen ist, durch den die Umdrehungsgeschwindigkeit der Kurvenscheibenwelle (4) gegenüber der Umdrehungsgeschwindigkeit der Prägerollen (2,3) vorzugsweise einstellbar ist.

18. Vorrichtung nach einem der vorhergehenden Ansprüche, dadurch gekennzeichnet, daß sich auf der gleichen Seite an jeweils einer der Stirnseiten (20,21) der Gegenprägerolle (2) und Prägerolle (3) zwei Zahnräder (22,23) mit einer Kämmung (24) vorhanden sind, die auch bei sikkungsunterbrechender Vergrößerung des Prägerollendurchgangs (49) bestehen bleibt.

19. Vorrichtung nach einem der vorhergehenden Ansprüche, dadurch gekennzeichnet, daß der jeweilige Zahnradaußendurchmesser der kämmenden Zahnräder (22,23) größer als die Durchmesser der Prägerollen (2,3) sind.

20. Vorrichtung nach einem der vorhergehenden Ansprüche, dadurch gekennzeichnet, daß das Verschiebegehäuse (8) im Standgehäuse (9) als gegen die Kurvenscheibe (12,13) bzw. die Kurvenscheiben (12,13) federbelastetes Teil ausgebildet ist.

21. Vorrichtung nach einem der vorhergehenden Ansprüche, dadurch gekennzeichnet, daß das Verschiebegehäuse (8) vorzugsweise eckseitig durchgehende Führungsöffnungen (29) besitzt, die eckseitig angeordnete Säulen (28) des Standgehäuses (9) umfassen, längs derer jeweils eine Führungsöffnung (29) bewegbar ist, so daß eine lineare Senk-/Hebeverschiebung (S/H) des Verschiebegehäuses (8) durchführbar ist.

22. Vorrichtung nach einem der vorhergehenden Ansprüche, dadurch gekennzeichnet, daß die Säulen (28) fest am Unterteil (27) des Standgehäuses (9) befestigt, insbesondere verschraubt sind und am Oberteil (26) des Standgehäuses (9) durch eine Einstellschraube (48) derart einstellbar gehaltert sind, daß mit der Einstellschraube (48) sowohl die Federbelastung des Verschiebegehäuses (8) auf den Außenring (46) des Kugellagers (11) als auch der die Sicken (18) erzeugbare, beabstandete Prägerollendurchgangs (49) einstellbar ist.

**23.** Vorrichtung nach einem der vorhergehenden Ansprüche, dadurch gekennzeichnet, daß das Standgehäuse (9) Federn (31) besitzt, die das Verschiebegehäuse (8) belasten, wobei die Federn (31) vorzugsweise als elastische Gummiringe ausgebildet sind, die die Säulen umfassen und vorn Oberteil (26) des Standgehäuses (9) aus die Kurvenscheibenwelle (4) des Verschiebegehäuses (8) auf das Kugellager (11) drücken.

**24.** Vorrichtung nach einem der vorhergehenden Ansprüche, dadurch gekennzeichnet, daß die Säulen (28) des Standgehäuses (9) jeweils von einer durchgehenden Führungsöffnung (29) umgeben sind, die Kugelbuchsen (30) enthalten, um das lineare Gleiten der Führungsöffnungen (29) längs der Säulen (28) zu erleichtern.

**25.** Vorrichtung nach einem der vorhergehenden Ansprüche, dadurch gekennzeichnet, daß mit einer einstellbaren Umdrehungsgeschwindigkeit einer der antreibbaren Prägerollen (2,3) und mit einer einstellbaren Umdrehungsgeschwindigkeit der antreibbaren Kurvenscheibenwelle (4) die Einstellänge (a) eines Prägedurchlaufs und die Längen (I-2d, 2d+b) eines Sickenabschnittes (39) und eines Sickenfreiraums (10) vorgebbar sind, wobei I die Flachrohrlänge, d die Steckabschnittslänge und b die Sägeschnittbreite bei einer Einstellänge a mit a = I+b darstellen.

**26.** Vorrichtung nach einem der vorhergehenden Ansprüche, dadurch gekennzeichnet, daß der Endlosblechstreifen (7) aus Leichtmetall, vorzugsweise aus Aluminium oder Aluminiumlegierungen besteht.

**27.** Flachrohr für Wärmetauscher, das nach dem erfindungsgemäßen, kontinuierlichen Verfahren und der erfindungsgemäßen Vorrichtung zur Herstellung eines gesickten Endlosblechstreifens nach vorhergehenden Ansprüchen herstellbar ist, dadurch gekennzeichnet, daß es vom gesickten Endlosblechstreifen (7) abtrennbar ist und auf den Flachrohrseiten jeweils einen Sickenabschnitt (39) mit musterartig geformten Sicken (18) hat und vorzugsweise rollverformt und verschlossen, vorzugsweise längsverschweißt bzw. verlötet ist sowie beidendig einen sickenfreien Steckabschnitt (36) aufweist, mit denen das Flachrohr in sich jeweils gegenüberliegende Sammelrohre eines Wärmetauschers steckbar und verlötbar ist.

Fig.1

Fig. 2

Fig. 3

EP 0 765 701 A1

Fig. 4a

34, 35

x

α = 0°

40

12, 13

Fig. 4b

35

34

40

13

12

Fig. 5a

13

y

34

12

α = 90°

12, 13

35

Fig. 5b

13

34

35

12

Fig. 6a

35

34

38

50

12

13

x'

α

Fig. 6b

35

34

13

12

EP 0 765 701 A1

Fig. 7a

Fig. 8a

Fig. 7b

Fig. 8b

| | Europäisches Patentamt | EUROPÄISCHER RECHERCHENBERICHT | Nummer der Anmeldung<br>EP 96 10 6244 |
|---|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US-A-3 918 626 (MCLAIN CHARLES D) 11.November 1975 * das ganze Dokument * | 1-27 | B21D53/04 B21D13/04 B21C37/083 |
| X | PATENT ABSTRACTS OF JAPAN vol. 016, no. 195 (M-1246), 12.Mai 1992 & JP-A-04 028438 (CALSONIC CORP), 31.Januar 1992, | 27 | |
| A | * Zusammenfassung * | 1 | |
| X | JP-A-04 028 438 (CALSONIC CORP) 31.Januar 1992 | 27 | |
| A | * Abbildungen * | 1 | |
| A | PATENT ABSTRACTS OF JAPAN vol. 010, no. 333 (M-534), 12.November 1986 & JP-A-61 137630 (NIPPON STEEL METAL PROD CO LTD), 25.Juni 1986, * Zusammenfassung * | 6 | |
| A | JP-A-61 137 630 (NIPPON STEEL METAL PROD CO LTD) 25.Juni 1986 * Abbildungen * | 6 | **RECHERCHIERTE SACHGEBIETE (Int.Cl.6)**<br>B21D<br>B21C |
| A | WO-A-95 05571 (INSILCO CORP THERMAL COMPONENT) 23.Februar 1995 * das ganze Dokument * | 6 | |
| A | US-A-3 686 917 (HIKIDA RYOTARO ET AL) 29.August 1972 * Spalte 1, Zeile 8 - Zeile 29 * | 6 | |

Der vorliegende Recherchenbericht wurde für alle Patentansprüche erstellt

| Recherchenort | Abschlußdatum der Recherche | Prüfer |
|---|---|---|
| DEN HAAG | 7.Januar 1997 | Ris, M |